# EUROPÄISCHE PATENTSCHRIFT

(11) **EP 2 549 630 B1**
(45) Veröffentlichungstag und Bekanntmachung des Hinweises auf die Patenterteilung: **02.10.2013**
(21) Anmeldenummer: 11174997.4
(22) Anmeldetag: 22.07.2011
(51) Int. Cl.: H02K 17/16, H02K 15/00

(54) **Kurzschlussläufer einer Asynchronmaschine und Verfahren zur Herstellung eines derartigen Läufers**
Short circuit rotor of an asynchronous engine and method for producing such a rotor
Cage d'écureuil d'une machine asynchrone et procédé de fabrication d'une telle cage

(43) Veröffentlichungstag der Anmeldung: 23.01.2013
(73) Patentinhaber: Siemens Aktiengesellschaft, 80333 München (DE)
(72) Erfinder: Lipot, Hans-Werner, 97616 Bad Neustadt (DE)

(56) Entgegenhaltungen:
- WO-A1-89/05054
- WO-A1-97/03490
- JP-A- 61 132 063

## Beschreibung

Die Erfindung betrifft einen Kurzschlussläufer einer Asynchronmaschine und ein Verfahren zur Herstellung eines derartigen Kurzschlussläufers.

Kurzschussläufer von Asynchronmaschinen, auch als Käfigläufer bezeichnet, sind insbesondere bei hohen Drehzahlen der Gefahr ausgesetzt, dass sich ihre Kurzschlussringe, die an den axialen Enden des Blechpakets angeordnet sind, aufgrund der Zentrifugalkräfte verbiegen oder gar zerbrechen.

Um die Fliehkräfte aufnehmen zu können, wird beispielsweise, wie aus DE 195 21 700 A1 bekannt, der von einem Blechpaket axial beabstandete Kurzschlussring mit einem Schrumpfring versehen.

Aus der DE 199 27 279 A1 sind Pressverbände eines vom Blechpaket axial beabstandeten Kurzschlussrings bekannt, die die Fliehkräfte des Kurzschlussrings aufnehmen sollen.

Aus der DE 10 2005 030 798 A1 ist ein Läufer einer Asynchronmaschine bekannt, mit direkt an den Stirnseiten eines Blechpakets vorhandenen Kurzschlussringen, wobei das Blechpaket Nuten zur Aufnahme von Kurzschlussstäben aufweist, wobei die Kurzschlussstäbe auf den jeweiligen Stirnseiten durch den Kurzschlussring verbunden sind und wobei zusätzliche Formbleche im Bereich der Kurzschlussringe vorhanden sind, die der Paketierung des Blechpakets und der Aufnahme der Fliehkräfte des Kurzschlussrings dienen.

Aus der WO 97/03490 A1 ist ein Kurzschlussläufer einer Asynchronmaschine bekannt, wobei das Blechpaket auf einer Welle drehfest positioniert ist und wobei ein Kurzschlusskäfig, der Kurzschlussstäbe in den Nuten und an den Stirnseiten jeweils die Kurzschlussstäbe verbindende Kurzschlussringe aufweist und mit einem Armierungsring an den Kurzschlussringen versehen ist, der die Kurzschlussringe zumindest radial außen umgreift und sich auf der Welle abstützt.

Diese bisher bekannten Lösungen sind in ihrer Umsetzung relativ aufwändig und damit teuer. Die Schrumpfringe oder die Pressverbände verursachen in den beteiligten Bauteilen mechanische Spannungen, welche sich erfahrungsgemäß nach einiger Betriebsdauer lösen und damit geometrische Veränderungen im Läufer hervorrufen, welche die ursprüngliche Laufruhe des Kurzschlussläufers beeinträchtigen.

Ausgehend davon liegt der Erfindung die Aufgabe zugrunde, eine Asynchronmaschine mit Kurzschlussläufer zu schaffen, die für hohe Drehzahlen geeignet ist, deren Herstellung vergleichsweise einfach ist und der die Aufnahme der bei hohen Drehzahlen des Kurzschlussläufers, insbesondere im Bereich der Kurschlussringe auftretenden Kräfte wirkungsvoll gewährleistet.

Die Lösung der gestellten Aufgabe gelingt dadurch, dass in einem Spalt zwischen Kurzschlussring und dem Armierungsring ein druckfester aushärtbarer Kunststoff vorgesehen ist.

Die Lösung der gestellten Aufgabe gelingt auch durch ein Verfahren zur Herstellung eines Kurzschlussläufers einer Asynchronmaschine, insbesondere eines Druckgussläufers mit in einem Blechpaket verlaufenden Nuten durch folgende Schritte:
- Paketieren oder Stanzpaketieren eines Blechpakets des Kurzschlussläufers,
- Positionieren des Kurzschlusskäfigs im Blechpaket,
- Aufschrumpfen des Blechpakets auf eine Welle,
- axiales Aufstecken von Armierungsringen auf die Stirnseiten des Kurzschlussläufers,
- Ausspritzen des Spalts zwischen Armierungsring und Kurzschlussring mit einem aushärtbaren druckfesten Kunststoff.

Um die Fliehkräfte des Kurzschlussläufers bei hohen Drehzahlen z.B. größer 4000 U/min, insbesondere des Kurzschlussringes aufzunehmen, wird nunmehr erfindungsgemäß an den Stirnseiten ein Armierungsring vorgesehen, der axial auf die Welle aufgeschoben wird und der den Kurzschlussring zumindest an seiner einem Stator zugewandten Fläche radial umfängt. Damit kann nunmehr die Fliehkraftbeanspruchung des Kurschlussrings und der Bleche im Bereich des Kurzschlussrings erheblich reduziert werden.

Aufgrund der erforderlichen Maßgenauigkeiten ist nun erfindungsgemäß der Spalt zwischen Armierungsring und Kurzschlussring mit einem aushärtbarem druckfesten Kunststoff versehen. Dieser Kunststoff wird nach der Positionierung der Armierungsringe an den Kurzschlussringen über eine speziell an den Armierungsringen vorgesehene Einspritzöffnung oder über den Spalt selbst in den Spalt zwischen Kurzschlussring und Armierungsring eingebracht und ausgehärtet.

Damit ergibt sich für die Herstellung des Kurzschlussläufers folgender Vorteil. Sowohl der Kurzschlussläufer, als auch der Armierungsring müssen nicht exakt auf Maß gearbeitet sein, um die im Betrieb auftretenden Kräfte wirkungsvoll zu kompensieren. Somit werden keine mechanischen Spannungen in diese Bauteile eingetragen, die sich im Laufe der Zeit reduzieren bzw. lösen und dadurch die Laufruhe des Kurzschlussläufers beeinträchtigen.

Durch den ausgehärteten Kunststoff werden die Kräfte direkt vom Kurzschlussring zum Armierungsring weitergeleitet, wie wenn eine Maßanfertigung von Kurzschlussring und Armierungsring vorliegen würde.

Erfindungsgemäß muss somit sowohl der Kurzschlussring weniger maßgenau gegossen werden ebenso, wie auch der Armierungsring insbesondere mit dem Abschnitt, der den Kurzschlussring umgreift weniger maßgenau ausgebildet sein muss. Dadurch ev. auftretende Unwuchten des Kurzschlussläufers können durch geeignete Mittel an den Stirnseiten des Kurzschlussrings bzw. des Armierungsrings kompensiert werden.

Dabei eignet sich ein Materialeintrag, z.B. in Form von Wuchtnocken, die auf einem vorgebbaren Radius der Kurzschlussringes oder des Armierungsringes vorgenommen werden.

Ebenso kann auch an den oben genannten Stellen auch Material entnommen bzw. abgetragen werden.

Die Fliehkräfte werden nunmehr vom Kurzschlussring über den ausgehärteten Kunststoff an die Umfassung des Armierungsrings weitergeleitet und dort aufgenommen, so dass eine radiale Ausladung des Kurzschlussrings unterbleibt.

Die Umgreifungsfläche wird durch eine wannenförmige Innenfläche des Armierungsringes im Bereich des Kurzschlussringes gewährleistet. Die Umgreifungsfläche kann aber auch als Stützring ausgeführt sein, der den Kurzschlussring nur an einer Seite abstützt, insbesondere der radial äußeren Seite, die einem Stator zugewandt ist. Dabei ist entscheidend, dass zumindest der Spalt zwischen dem Kurzschlussring und der radialen Umgreifungsfläche mit aushärtbaren Kunststoff versehen ist.

Vorteilhafterweise haben sowohl der Kurzschlussring als auch der Kunststoff und insbesondere der Armierungsring den gleichen thermischen Ausdehnungskoeffizienten. Damit werden unnötige Materialspannungen innerhalb der Anordnung vermieden.

Das Herstellungsverfahren eines Kurzschlussläufers vereinfacht sich erfindungsgemäß dadurch, dass der bisher einfach druckgegossene Kurzschlussläufer nunmehr mit einem Armierungsring auf den beiden Stirnseiten versehen wird, der nicht zwangsläufig exakt auf Maß und passgenau verarbeitet und/oder aufgepresst bzw. aufgeschrumpft sein muss.

Der sich daraufhin zwangsläufig einstellende Spalt zwischen der Innenfläche des Armierungsrings und der Oberfläche des Kurzschlussrings wird nunmehr erfindungsgemäß mit einem aushärtbaren druckfesten Kunststoff ausgefüllt.

Damit wirken die Rückhaltekräfte des Armierungsrings unmittelbar auf den Kurschlussring zurück, der im Betrieb der Asynchronmaschine das Bestreben hat, sich aufgrund der einstellenden Fliehkräfte radial auszudehnen.

Der Kunststoff kann dabei auf verschiedene Arten in den Spalt zwischen der Innenfläche des Armierungsrings und der Oberfläche des Kurzschlussrings gelangen.

Der Kunststoff wird über eine Montagevorrichtung, die ein Austreten des Kunststoffs an den Rändern des Armierungsringes verhindert in den Spalt gegeben. Damit kann der Spalt, auch mit einem vorgebbaren Druck mit Kunststoff gefüllt werden, was Hohlräume in dem Spalt vermeidet. Damit ist die Fliehkraftkompensation auf jeden Fall gewährleistet.

Eine weitere Variante ist, den Kunststoff vor Montage des Armierungsringes auf den Kurzschlussring mit einer vorgebbaren Schichtdicke z.B. an der Innenfläche des Armierungsrings zu versehen. Durch Aufsetzen und Positionieren des Armierungsringes auf dem Kurzschlussring quillt der überflüssige Kunststoff aus dem Spalt und wird vor dem Aushärten des Kunststoffs abgetragen.

Die Aushärtung des Kunststoffs erfolgt beispielsweise durch Temperatureinwirkung. Dabei wird entweder der gesamte Kurzschlussläufer oder nur die mit den Armierungsringen und dem Kunststoff versehenen Kurzschlussringe einer in Zeit und Temperatur variierbaren Wärmebehandlung ausgesetzt.

Die Erfindung sowie weitere vorteilhafte Ausgestaltungen der Erfindung sind den Ausführungsbeispielen zu entnehmen. Darin zeigen:
- FIG 1: einen Längsschnitt einer Asynchronmaschine,
- FIG 2: eine Detailansicht eines Kurzschlussrings,
- FIG 3 bis 6: Ausführungsformen des Armierungsringes.

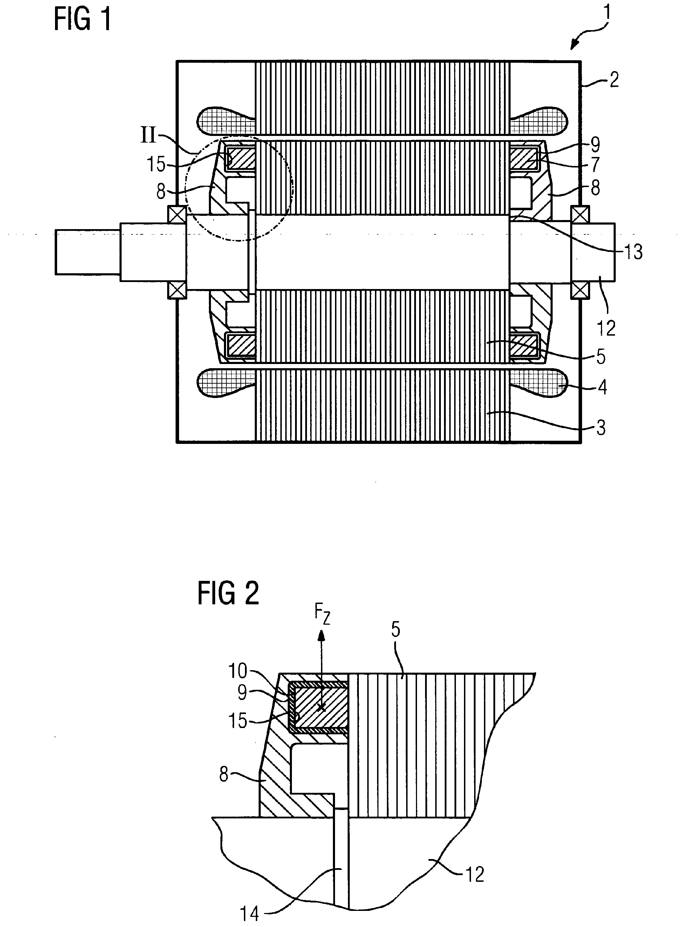

FIG 1 zeigt in einem prinzipiellen Längsschnitt eine Asynchronmaschine 1 in einem Gehäuse 2, das ein Statorblechpaket 3 aufweist, in das eine nicht näher dargestellte Wicklung eingelegt ist, die an den Stirnseiten des Statorblechpakets 3 Wickelköpfe 4 ausbildet. Das Statorblechpaket 3 umgibt eine Statorbohrung. Radial innerhalb der Statorbohrung befindet sich ein Läufer 5, der als Kurzschlussläufer ausgebildet ist. Der Läufer 5 ist aus geblechten Lamellen aufgebaut, die drehfest mit einer Welle 12 verbunden sind. Die Welle 12 ist indem Gehäuse 2 gelagert.

In nicht näher dargestellten Nuten, des aus Lamellen gebildeten Blechpaket des Läufers 5, befinden sich Kurzschlussstäbe 6, die mit einem Kurzschlussring 7 direkt an der Stirnseite des Läufers elektrisch leitend verbunden sind. Insbesondere bilden Kurzschlussstäbe 6 und Kurzschlussring 7 ein im Druckgussverfahren hergestelltes einstückiges Teil, einen Kurzschlusskäfig.

Die Erfindung ist aber auch für Kurzschlussläufer geeignet, bei denen Kurzschlussstäbe 6 und Kurzschlussringe 7 miteinander verschweißt oder verlötet werden.

Ebenso ist die Erfindung auch für einen Läufer 5 geeignet, bei dem die Kurzschlussringe 7 von den Stirnseiten des Blechpaket des Läufers 5 beabstandet sind.

An den Stirnseiten des Läufers 5 befindet sich jeweils ein den Kurzschlussring 7 umfassender Armierungsring 8. In dieser Ausführungsform nach FIG 1 wird dabei der Kurzschlussring 7 von drei Seiten durch den Armierungsring umfasst und auf einer Seite durch das Blechpaket des Läufers 5 begrenzt.

Zwischen Armierungsring 8 und Kurzschlussring 7 ist ein Spalt 9, der mit einem druckfesten aushärtbaren Kunststoff gefüllt wird. Dies geschieht beispielsweise über spezielle Öffnungen des Armierungsrings 8, die nicht näher dargestellt sind. Der Armierungsring 8 ist durch einen Anschlag 14 der Welle 12 auf der linken Seite positioniert, während er auf der rechten Seite des Läufers 5 die Positionierung durch einen Wellenabsatz 13 erfolgt.

Die Position der Armierungsringe 8 als auch des Blechpaket des Läufers 5 wird durch seine Position bezüglich der Welle 12 definiert. Eine Maßgenauigkeit dieser Teile ist damit nur bzgl. der Welle 12 notwendig. Eine Maßgenauigkeit der Innenfläche des Armierungsringes 8 zum Kurzschlussring 7 ist nur bedingt notwendig. Damit weist der Spalt 9 ggf. unterschiedlichste Weiten auf, die aber durch den druckfesten aushärtbaren Kunststoff gefüllt werden und somit unkritisch sind.

Nach FIG 2 werden damit die Fliehkräfte F_{z} des Kurzschlussringes 7 im Betrieb der Asynchronmaschine aufgenommen.

Das Blechpaket des Läufers 5 wird zur Herstellung dabei von der rechten Seite auf die Welle 12 aufgeschoben und mit ihr drehfest verbunden. Dies geschieht beispielsweise durch einen Wärmeschrumpfprozess. Dabei wird das Blechpaket des Läufers 5 aufgeheizt und dehnt sich aus. Nun kann die Welle 12 gefügt werden. Durch die anschließende Abkühlung ergibt sich eine drehfeste Verbindung zwischen Blechpaket und Welle 12.

Alternativ kann auch die Welle 12 stark gekühlt werden und so in das Blechpaket gesteckt werden.

Als Anschlag für das Blechpaket dient dabei jeweils ein umlaufender Anschlag 14. Nach dem Positionieren des Blechpakts mit seinen druckgegossenen Kurzschlusskäfig werden die Armierungsringe 8 an den Stirnseiten des Läufers 5 angebracht und ebenfalls mit der Welle 12 beispielsweise wie oben beschrieben drehfest verbunden. Anschließend werden die Spalte 9 durch den Kunststoff gefüllt.

Der Kunststoff wird beispielsweise über eine Montagevorrichtung, die ein Austreten des Kunststoffs an den Rändern des Armierungsringes 8 verhindert in den Spalt 9 gegeben. Damit kann der Spalt 9, auch mit einem vorgebbaren Druck mit Kunststoff gefüllt werden, was Hohlräume in dem Spalt 9 vermeidet. Nach dem Aushärten des Kunststoffs ist die Fliehkraftkompensation wie bei exakter Maßhaltigkeit von Kurzschlussring 7 und Umgreifungsfläche des Armierungsrings 8 gewährleistet.

Eine weitere Möglichkeit den Kunststoff in den Spalt einzubringen besteht darin, den Kunststoff vor Montage des Armierungsringes 8 auf den Kurzschlussring 7 an der Innenfläche des Armierungsrings 8 mit einer vorgebbaren Schichtdicke aufzutragen. Durch Aufsetzen und Positionieren des Armierungsringes 8 auf dem Kurzschlussring 7 quillt der überflüssige Kunststoff aus dem Spalt 9 und wird vor dem Aushärten des Kunststoffs abgetragen.

Die Aushärtung des Kunststoffs erfolgt beispielsweise durch Wärmeeintrag in einem Ofen oder durch Bestrahlung. Dabei wird entweder der gesamte Kurzschlussläufer oder nur die mit den Armierungsringen 8 und dem Kunststoff versehenen Kurzschlussringe 8 einer in Zeit und Temperatur variierbaren Wärmebehandlung ausgesetzt.

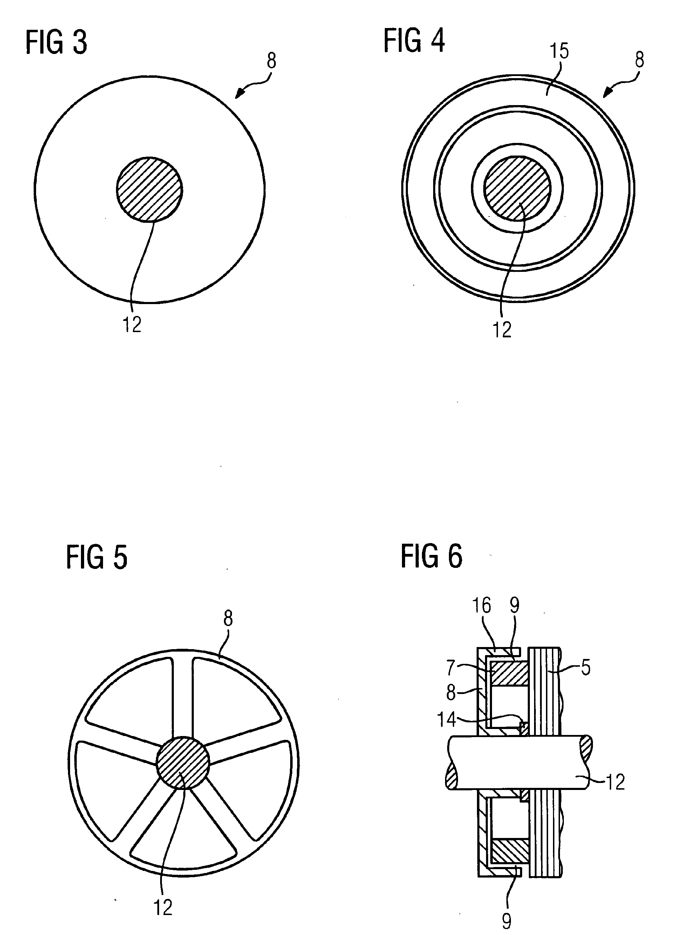

FIG 3, 4 zeigt eine Ausführungsform des Armierungsringes 8, der prinzipiell auch in FIG 1 und 2 gezeigt ist. Dabei umgibt eine wannenartige Innenfläche 15 des Armierungsringes 8 den Kurzschlussring 7 auf drei Seiten.

In einer anderen Ausführungsform des Armierungsringes 8 gemäß FIG 5,6 umgibt ein Stützring 16 zumindest einen Teil der radial äußeren Seite des Kurzschlussringes 7. Der Stützring 16 ist dabei von einer speichenartigen Vorrichtung gehalten, die an der Welle 12 positioniert ist. Der mit Kunststoff zu füllende Spalt 9 ergibt sich somit nur zwischen einem äußeren Teil des Kurzschlussrings 7 und dem Stützring 16.

## Patentansprüche

1. Kurzschlussläufer einer Asynchronmaschine, insbesondere Druckgussläufer mit in einem Blechpaket verlaufenden Nuten, wobei das Blechpaket auf einer Welle (12) drehfest positioniert ist,
- mit einem Kurzschlusskäfig, der Kurzschlussstäbe (6) in den Nuten und an den Stirnseiten jeweils die Kurzschlussstäbe verbindende Kurzschlussringe (7) aufweist,
- mit einem Armierungsring (8) an den Kurzschlussringen (7), der die Kurzschlussringe (7) zumindest radial außen umgreift und sich auf der Welle abstützt,
**dadurch gekennzeichnet, dass** in einem Spalt (9) zwischen Kurzschlussring (7) und dem Armierungsring (8) ein druckfester aushärtbarer Kunststoff vorgesehen ist.

2. Kurschlussläufer nach einem der vorhergehenden Ansprüche, **dadurch gekennzeichnet, dass** ein Abschnitt des Armierungsrings (8) den Kurzschlussring (7) wannenförmig umgreift.

3. Kurzschlussläufer nach einem der Ansprüche 1 oder 2, **dadurch gekennzeichnet, dass** der Armierungsring (8) einen Stützring (16) aufweist, der den Kurzschlussring (7) zumindest an einem Teil der radial äußeren Oberfläche des Kurzschlussringes (7) umfasst.

4. Kurzschlussläufer nach einem der vorhergehenden Ansprüche, **dadurch gekennzeichnet, dass** zumindest der Armierungsring (8) und der Kurzschlussring (7) im Wesentlichen gleiche thermische Ausdehnungskoeffizienten aufweisen.

5. Verfahren zur Herstellung eines Kurzschlussläufers einer Asynchronmaschine, insbesondere eines Druckgussläufers mit in einem Blechpaket verlaufenden Nuten **gekennzeichnet durch** folgende Schritte:
- Paketieren oder Stanzpaketieren eines Blechpakets des Kurzschlussläufers,
- Positionieren des Kurzschlusskäfigs im Blechpaket,
- Aufschrumpfen des Blechpakets auf eine Welle (12),
- axiales Aufstecken von Armierungsringen (8) auf die Stirnseiten des Kurzschlussläufers,
- Ausspritzen des Spalts (9) zwischen Armierungsring (8) und Kurzschlussring (7) mit einem aushärtbaren druckfesten Kunststoff.

6. Verfahren nach Anspruch 5, **dadurch gekennzeichnet, dass** der Kurzschlusskäfig durch Formstäbe und einem Lötvorgang bzw. Schweißvorgang mit Kurzschlussringen (7) oder komplett durch ein Druckgussverfahren von Kurzschlussstäben (6) und Kurzschlussringen (7) gebildet wird.

## Claims

1. Squirrel-cage rotor of an asynchronous machine, in particular a die cast rotor having grooves running in a laminated core, wherein the laminated core is positioned on a shaft (12) in a rotatably fixed manner,
- having a squirrel cage which has short-circuit rods (6) in the grooves and short-circuit rings (7) connecting the short-circuit rods on the front faces in each instance,
- having a shrink ring (8) on the short-circuit rings (7), which surrounds the short-circuit ring (7) at least radially outside and rests on the shaft,
**characterized in that** a pressure-resistant hardenable plastic is provided in a gap (9) between the short-circuit ring (7) and the shrink ring (8).

2. Squirrel-cage rotor according to one of the preceding claims, **characterized in that** a section of the shrink ring (8) surrounds the short-circuit ring (7) in a bowl-type fashion.

3. Squirrel-cage rotor according to one of claims 1 or 2, **characterized in that** the shrink ring (8) has a supporting ring (16), which surrounds the short-circuit ring (8) at least on one part of the radial outer surface of the short-circuit ring (7).

4. Squirrel-cage rotor according to one of the preceding claims, **characterized in that** at least the shrink ring (8) and the short-circuit ring (7) essentially have the same thermal expansion coefficient.

5. Method for producing a squirrel-cage rotor of an asynchronous machine, in particular of a die-cast rotor having grooves running in a laminated core, **characterised by** the following steps:
- packaging or punch packaging a laminated core of the squirrel-cage rotor,
- positioning the squirrel cage in the laminated core,
- shrink fitting the laminated core on a shaft (12),
- axially attaching the shrink rings (8) on the front faces of the squirrel-cage rotor,
- spraying a hardenable pressure-resistant plastic into the gap (9) between the shrink ring (8) and the short-circuit ring (7).

6. Method according to claim 5,
**characterized in that**
the squirrel cage is formed by forming rods and a soldering process and/or welding process with short-circuit rings (7) or completely by a die casting method of short-circuit rods (6) and short-circuit rings (7).

## Revendications

1. Rotor à cage d'écureuil d'une machine asynchrone, notamment rotor coulé sous pression, ayant des encoches s'étendant dans un paquet de tôles, dans lequel le paquet de tôles est monté solidaire en rotation d'un arbre ( 12 ),
- comprenant une cage d'écureuil, qui a des barreaux ( 6 ) dans les encoches et, sur les côtés frontaux, des anneaux ( 7 ) reliant respectivement les barreaux,
- comprenant un anneau ( 8 ) d'armure sur les anneaux ( 7 ) de cage, qui entoure, au moins radialement à l'extérieur, les anneaux ( 7 ) de cage et qui s'appuie sur l'arbre,
**caractérisé en ce qu'**il est prévu une matière plastique durcissable et résistante à la pression dans un intervalle ( 9 ) entre un anneau ( 7 ) de cage et l'anneau ( 8 ) d'armure.

2. Rotor à cage d'écureuil suivant la revendication précédente, **caractérisé en ce qu'**une partie de l'anneau ( 8 ) d'armure entoure, en forme de cuvette, l'anneau ( 7 ) de cage.

3. Rotor à cage d'écureuil suivant l'une des revendications 1 ou 2,
**caractérisé en ce que** l'anneau ( 8 ) d'armure a un anneau ( 16 ) d'appui, qui entoure l'anneau ( 7 ) de cage au moins sur une partie de la surface extérieure radialement de l'anneau ( 7 ) de cage.

4. Rotor à cage d'écureuil suivant l'une des revendications précédentes,
**caractérisé en ce qu'**au moins l'anneau ( 8 ) d'armure et l'anneau ( 7 ) de cage ont sensiblement le même coefficient de dilatation thermique.

5. Procédé de fabrication d'un rotor à cage d'écureuil d'une machine asynchrone, notamment d'un rotor coulé sous pression, ayant des encoches s'étendant dans le paquet de tôles, **caractérisé par** les stades suivantes :
- on met en paquet ou on met en paquet par poinçonnage un paquet de tôles du rotor à cage d'écureuil,
- on met la cage d'écureuil en position dans le paquet de tôles,
- on rétreint le paquet de tôles sur un arbre ( 12 ),
- on enfile axialement des anneaux ( 8 ) d'armure sur les côtés frontaux du rotor à cage d'écureuil,
- on pulvérise de la matière plastique durciçable et résistante à la pression dans l'intervalle ( 9 ) entre l'anneau ( 8 ) d'armure et l'anneau ( 7 ) de cage.

6. Procédé suivant la revendication 5,
**caractérisé en ce qu'**on forme la cage d'écureuil par des barreaux de forme et par une opération de brasure ou de soudure avec des anneaux ( 7 ) de cage ou complètement par un procédé de coulée sous pression de barreau ( 6 ) de cage et d'anneau ( 7 ) de cage.
